# EUROPEAN PATENT APPLICATION

(11) **EP 2 341 386 A1**
(43) Date of publication of application: **06.07.2011**
(21) Application number: 09275125.4
(22) Date of filing: 17.12.2009
(51) Int. Cl.: G02B 27/01, G06F 3/01

(54) **A method of aligning a helmet mounted display**

(71) Applicant: BAE Systems PLC, London SW1Y 5AD (GB)
(72) Inventor: The designation of the inventor has not yet been filed
(74) Representative: Edis, Ronald Malcolm

(57) **Abstract**

A method and system for aligning a helmet mountable display with respect to a helmet is disclosed. The method comprises the steps of:
- aligning a first helmet mounted display guide symbol with a reference direction;
- selecting the alignment of the first helmet mounted display guide symbol with the reference direction;
- aligning a second helmet mounted display guide symbol with the reference direction; and
- selecting the alignment of the second helmet mounted display guide symbol with the reference direction.

## Description

The present invention relates to a method of aligning a helmet mounted display. The present invention further relates to a helmet mountable display system.

A large number of helmet mounted display (HMD) systems for use on aircraft incorporate a helmet tracking system (HTS) which monitors the orientation of the helmet within the aircraft. This improves the capabilities of the HMD in the following ways:
- HMD symbols can be stabilised with respect to head movement so that they overlay specified points relative to the aircraft or relative to the ground.
- HMD symbology can be used to cue a user to a particular viewing direction relative to the aircraft or relative to the ground.
- Fixed HMD symbols can be used to designate outside points or to direct aircraft sensors using head movement.

In order to realise these capabilities, it is necessary to know the alignment of the HMD within the helmet frame of reference as reported by the HTS, so that display symbols can be accurately positioned on the display. A problem with some types of HMDs however, is that the alignment of the HMD with the helmet cannot be determined prior to use and may even change during use. For example, in some systems the display is injected into the field of view of night vision goggles (NVG). The mounting of NVGs is normally such that the NVGs can be positioned at varying angles relative to the helmet and may be repositioned from time to time by a single user, leading to unpredictable changes in the HMD alignment. In addition to NVGs there are other types of HMDs which clip onto the helmet and/or which allow the user to adjust their physical alignment, again leading to unpredictable alignment with the helmet.

The solution to the HMD alignment problem is boresighting. This is a procedure performed by the user in which HMD symbology is lined up with known fiducial references installed in the aircraft. The combination of HMD symbol positions, known fiducial alignment and HTS-monitored helmet orientation is used to calculate the alignment of the HMD. Generally, the boresighting procedure is performed by aircrew at the start of a mission and may be repeated several times during a mission. It is therefore important that boresighting be a quick and easy procedure, taking no more than a few seconds.

Current methods for boresighting require the user to line up HMD symbology in three axes, namely azimuth, elevation and roll, simultaneously. This requires the use of a horizontally or vertically extended fiducial, such as a cross, to provide the roll reference. In these circumstances, the user is typically required to align a first symbol at the intersection of the lines forming the cross and simultaneously align a second symbol upon a particular line forming the cross to provide the alignment along the roll coordinate. Typically, the reference is provided by two so-called boresight reticule units (BRUs), however if two BRUs are used, they must be accurately installed to be visible to the same eye at the same time. In any event, it is difficult for the user to line up fixed HMD symbology with fiducial reference in all three axes simultaneously using head movement, particularly when airborne.

We have now devised an improved method of aligning a helmet mounted display.

In accordance with the present invention as seen from a first aspect, there is provided a method of aligning a helmet mounted display, the method comprising the steps of:
- aligning a first helmet mounted display guide symbol with a reference direction;
- selecting the alignment of the first helmet mounted display guide symbol with the reference direction;
- aligning a second helmet mounted display guide symbol with the reference direction; and
- selecting the alignment of the second helmet mounted display guide symbol with the reference direction.

The method thus offers the advantages over existing boresighting methods that only a single line of sight fiducial reference is needed and that there is no requirement for a user to align the helmet mounted display along a roll coordinate.

The alignment of the first and second guide symbols with the reference direction is preferably performed by a user by positioning the helmet upon the users' head and moving the users' head to move the display.

Preferably, the method further comprises providing a first stabilised symbol on the display, once the alignment of the first guide symbol has been selected.

Preferably, the method further comprises providing a second stabilised symbol on the display, once the alignment of the second guide symbol has been selected.

The method preferably further comprises adjusting the alignment of the first stabilised symbol with the reference direction, to more accurately align the first stabilised symbol with the reference direction. The method further comprises confirming the adjusted alignment of first stabilised symbol with the reference direction.

The method preferably further comprises adjusting the alignment of the second stabilised symbol with the reference direction, to more accurately align the second stabilised symbol with the reference direction. The method further comprises confirming the adjusted alignment of second stabilised symbol with the reference direction.

Preferably, the adjustment is performed using a manual control, such as a joystick. Alternatively, the adjustment is performed by the user by moving the users' head to effect movement of the display.

In a further alternative, the adjustment of one of the first and second stabilised symbols is preferably performed using a manual control and the adjustment of other of the first and second stabilised symbols is performed by the user by moving the users' head to effect movement of the display.

The method preferably further comprises controlling the sensitivity to movement of the stabilised symbols with respect to movements of the joystick and/or head movements of the user. The sensitivity control preferably provides for a scaled movement of the stabilised symbols with respect to a movement of the joystick and/or user's head. It is envisaged that the sensitivity control will enable a user to accurately align the stabilised symbols with relatively coarse head movements.

In accordance with the present invention as seen from a second aspect, there is provided a helmet mountable display system, the system comprising a helmet mountable display and means for indicating a reference direction, the helmet mountable display being arranged to display at least two symbols for aligning with the reference direction to suitably align the helmet mountable display with respect to a helmet, the system further comprising means for separately selecting the alignment of the at least two symbols with the reference direction.

Preferably, the means for indicating a reference direction is arranged to generate a reference symbol along a known line of sight. The reference symbol is preferably generated using a boresight reticule unit. Alternatively, or in addition thereto, the reference symbol is generated using a head up display which is arranged to display reference symbology.

Preferably, the system further comprises means for adjusting the alignment of symbols with the reference direction.

Preferably, the system further comprises means for selecting the alignment of symbols with the reference direction. Preferably, the system further comprises means for confirming the alignment of symbols with the reference direction.

Embodiments of the present invention will now be described by way of example only and with reference to the accompanying drawings, in which:
Figure 1 is a schematic illustration of a helmet mountable display mounted upon a helmet, showing the fiducial reference;
Figure 2a is a pilots view of the guide symbols presented on the display illustrated in figure 1;
Figure 2b is a pilots view of the first guide symbol and first stabilised symbol presented on the display illustrated in figure 1; and,
Figure 2c is a pilots view of the second guide symbol and second stabilised symbol presented on the display illustrated in figure 1.

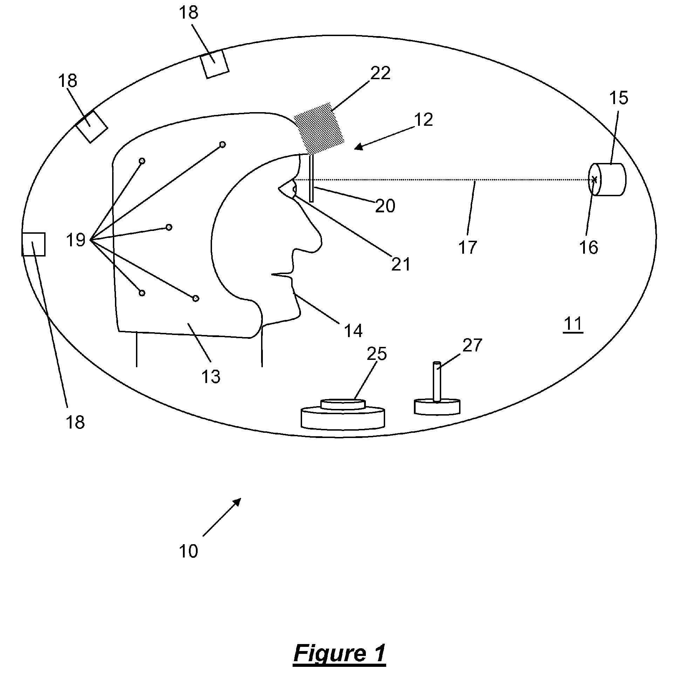

Referring to figure 1, there is illustrated a helmet mountable display system 10 according to an embodiment of the present invention arranged, for example, within a cockpit 11 of an aircraft (not shown). The display unit 12 is mountable upon a helmet 13 for a pilot 14 for example, and a boresight reticule unit 15 for example, is disposed at a known position and orientation within the cockpit 11 and is arranged to provide a reference symbol 16 along a known line of sight 17 within the cockpit 11. The cockpit 11 comprises a plurality of sensors and/or cameras 18 disposed therein for monitoring the position of light emitting diodes (LEDs) 19 positioned upon the exterior of the helmet 13. The LEDs 19 are positioned at known locations upon the helmet 13, such that the sensors and/or cameras 19 positioned within the cockpit 11 can monitor and track the position and orientation of the LEDs 19 and thus the helmet 13, within the cockpit 11. It is to be appreciated however, that various other helmet tracking arrangements, such as a magnetic, acoustic and inertial tracking arrangements would provide an equal substitute for this optical tracking arrangement.

The display unit 12 is detachably secured to the helmet 13 or may be arranged to pivot thereon, for example, between at least two lockable positions and comprises a field of view, for example a display screen 20 which is arranged to extend in front of a pilots' eye 21. The unit 12 further comprises an image generating and projecting device 22 for generating and projecting symbols into the field of view of the pilot, to inform a pilot 14 for example, of flight information and to aid a pilot 14 in flying an aircraft (not shown). The symbols are focussed substantially at optical infinity upon the screen 20 so that the symbols remain in view of the pilot while the pilot is looking out of the cockpit, for example.

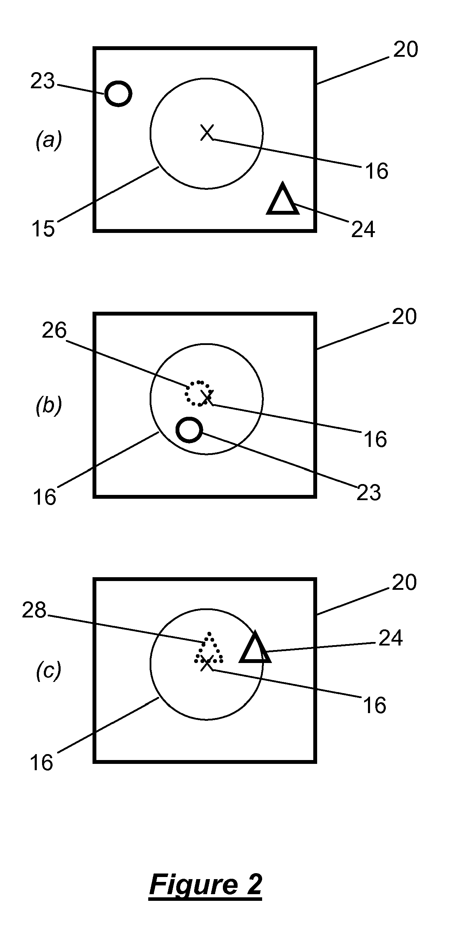

Once the helmet 13 has been suitably positioned upon the pilots head, and the display unit 12 secured in place such that the display screen 20 extends in front of the pilots' eye 21, the pilot 14 then proceeds to align the display unit 12 with respect to the helmet 13 so that symbols which become displayed on the screen 20 are displayed at accurately known positions. Referring to figure 2 of the drawings, the display unit 12 is arranged to display a first and second guide symbol 23, 24 at separated and fixed positions upon the screen 20 and the pilot 14 then uses head movement to align the first guide symbol 23 with the reference symbol 16 generated by the boresight reticule unit 15. The pilot 14 then selects the aligned position by pressing a button 25 for example, disposed within the cockpit 11. During this alignment, the system 10 records the tracked movement and orientation of the helmet 13 by monitoring the movement and orientation of LEDs 19 on the helmet 13. The pilot 14 then uses head movement to align the second guide symbol 24 with the reference symbol 16 generated by the boresight reticule unit 15 and similarly selects the aligned position by pressing the button 25 disposed within the cockpit 11. During this subsequent head movement, the system 10 further monitors and tracks the movement and orientation of the helmet 13 within the cockpit 11.

The monitored position and orientation of the helmet 13 at each selected alignment, together with the known line of sight 17 provided by the boresight reticule unit 15, enables the system 10 to calibrate the alignment of the helmet mounted display 12 with respect to the helmet 13. According to a first embodiment of the present invention, a first stabilised symbol 26 is generated on the screen 20 upon selecting the alignment of the first guide symbol 23 with the reference symbol 16, and is arranged to remain in the selected position, with respect to the cockpit 11, of the first guide symbol 23. While maintaining an approximate alignment of the first guide symbol 23 with the reference symbol 16, the pilot 14 uses a 2-axis manual control such as a joystick 27, to adjust the position of the first stabilised symbol 26 until it becomes more accurately aligned with the reference symbol 16. The pilot 14 then confirms the alignment by pressing the button 25 again, for example.

Similarly, a second stabilised symbol 28 is generated on the screen 20 upon selecting the alignment of the second guide symbol 24 with the reference symbol 16, and is arranged to remain in the selected position, with respect to the cockpit 11, of the second guide symbol 24. While maintaining an approximate alignment of the second guide symbol 24 with the reference symbol 16 generated by the boresight reticule unit 15, the pilot 14 uses the 2-axis manual control, such as the joystick 27, to adjust the position of the second stabilised symbol 28 until it becomes more accurately aligned with the reference symbol 16. The pilot 14 then confirms the alignment by pressing the button 25 again, for example.

The system 10 records the confirmed stabilised display line of sight of the first and second stabilised symbols 26, 28 and then uses this information, together with the monitored position of the helmet 13 as determined at the selected alignment of the first and second guide symbols 23, 24, to more accurately calibrate the alignment of the helmet mounted display 12 with respect to the helmet 13.

According to a second embodiment of the present invention, the position of the first and second stabilised symbols 26, 28 upon the screen 20 is adjustable using head movement alone, without any requirement for a separate manual control, such as the joystick 27. In this embodiment, the pilot 14 for example, controls the sensitivity to movement of the stabilised symbols 26, 28 with respect to corresponding head movement, such that relatively large, erratic head movements produce small, smooth movements of the stabilised symbols 26, 28, thereby making it easier to more accurately align the stabilised symbol 26, 28 with the reference symbol 16. It is envisaged that this sensitivity control may be adjustable so that a pilot 14 for example, may be able to vary the sensitivity to suit a particular environment.

Upon positioning the stabilised symbols 26, 28 more accurately over the reference, the pilot 14 confirms the more accurate alignment by pressing the button 25, for example. The system subsequently records the confirmed line of sight of the first and second stabilised symbols 26, 28 and uses this information, together with the monitored position of the helmet 13 as determined at the selected alignment of the first and second guide symbols 23, 24, to more accurately calibrate the alignment of the helmet mounted display 12 with respect to the helmet 13.

According to a third embodiment of the present invention the position of the first and second stabilised symbols 26, 28 upon the screen 20 is adjustable using either joystick movement and head movement, such that a pilot 14, may choose which of the joystick 27 or head movement to use in aligning the stabilised symbols 26, 28. Moreover, is envisaged that the sensitivity control (not shown) may be applied to the joystick in addition to movements of the pilots head, for example.

From the foregoing therefore, it is evident that the method and system of the present invention provide for a rapid alignment of helmet mountable display with respect to a helmet, by eliminating the requirement to align the display in 3-axes simultaneously.

## Claims

1. A method of aligning a helmet mounted display, the method comprising the steps of:
- aligning a first helmet mounted display guide symbol with a reference direction;
- selecting the alignment of the first helmet mounted display guide symbol with the reference direction;
- aligning a second helmet mounted display guide symbol with the reference direction; and
- selecting the alignment of the second helmet mounted display guide symbol with the reference direction.

2. A method according to claim 1, wherein the alignment of the first and second guide symbols with the reference direction is performed by a user, by positioning the helmet upon the users' head and moving the users' head to move the display.

3. A method according to claim 1 or 2, further comprising providing a first stabilised symbol on the display, once the alignment of the first guide symbol has been selected.

4. A method according to any preceding claim, further comprising providing a second stabilised symbol on the display, once the alignment of the second guide symbol has been selected.

5. A method according to claim 3, further comprising adjusting the alignment of the first stabilised symbol with the reference direction, to more accurately align the first stabilised symbol with the reference direction.

6. A method according to claim 5, further comprising confirming the adjusted alignment of first stabilised symbol with the reference direction.

7. A method according to claim 4, further comprising adjusting the alignment of the second stabilised symbol with the reference direction, to more accurately align the second stabilised symbol with the reference direction.

8. A method according to claim 7, further comprising confirming the adjusted alignment of second stabilised symbol with the reference direction.

9. A method according to claim 5 and 7 wherein the adjustment is performed using a manual control.

10. A method according to claim 5 and 7, as appended to claim 2, wherein the adjustment is performed by the user by moving the users' head to effect movement of the display.

11. A method according to claim 5 and 7, as appended to claim 2, wherein the adjustment of one of the first and second stabilised symbols is performed using a manual control and the adjustment of other of the first and second stabilised symbols is performed by the user by moving the users' head to effect movement of the display.

12. A method according to claim 10 or 11, further comprising controlling the sensitivity to movement of the stabilised symbols with respect to movements of the joystick and/or head movements of the user.

13. A method according to claim 12, wherein the sensitivity control provides for a scaled movement of the stabilised symbols with respect to a movement of the joystick and/or user's head.

14. A helmet mountable display system, the system comprising a helmet mountable display and means for indicating a reference direction, the helmet mountable display being arranged to display at least two symbols for aligning with the reference direction to suitably align the helmet mountable display with respect to a helmet, the system further comprising means for separately selecting the alignment of the at least two symbols with the reference direction.

15. A system according to claim 14, wherein the means for indicating a reference direction is arranged to generate a reference symbol along a known line of sight.
